# EUROPEAN PATENT APPLICATION

(11) **EP 4 575 563 A1**
(43) Date of publication of application: **25.06.2025**
(21) Application number: 23219450.6
(22) Date of filing: 21.12.2023
(51) Int. Cl.: G01S 7/481, G01S 17/42, G01S 17/89

(54) **ELLIPTICAL PATTERN GENERATION FOR SCANNING INSTRUMENTS**

(71) Applicant: Hexagon Technology Center GmbH, 9435 Heerbrugg (CH)
(72) Inventor: MASUR, Jan-Michael, 88131 Lindau (DE); BESTLER, Simon, 88085 Langenargen (DE); WOHLGENANNT, Rainer, 6833 Klaus (AT)
(74) Representative: Kaminski Harmann

(57) **Abstract**

The invention relates to a mobile scanning instrument mounted on a carrier vehicle, and configured to acquire point cloud data representing a target area. The mobile scan instrument comprise a beam deflection element having a first and a second wedge mounted rotatable about the central axis. The wedges deflect the scanning beam with a first and a second deflection angle. The two defection angles are different. The scanning instrument configured to provide a first scan pattern having a circular shape by rotating the wedges in the same direction and a second scan pattern having an elliptical shape by rotating the wedges in the opposite direction.

## Description

### FIELD OF THE INVENTION

The present invention relates to a structure and operation of a mobile scanning instrument configured to acquire a point cloud data representing a target area. The mobile scanning instrument is configured to be mounted to a carrier vehicle, in particular an aerial vehicle, and acquire the point cloud, while the carrier vehicle is travelling with a carrier velocity.

### BACKGROUND OF THE INVENTION

To capture two- or three-dimensional or information on target area, in particular an urban or agricultural area, scanning methods are typically utilized. Ideally a homogenous, dense point cloud is provided. Generic scanning instruments scan the setting with a scanning beam, in particular a laser-beam, and determine the distance of object points based e.g. on time of flight measurement. The point cloud representing the setting is generated by combining the measured distance information with the emission angle, e.g. represented as azimuth and inclination angles, of the scanning beam. The capturing of the point cloud is carried out during a spatial movement of the scanning instrument. The own movement of the scanning instrument, respectively the movement of a mobile carrier, has to be acquired and merged with the scan data. While the applicability of the present invention is not limited to the field of aerial scanning, many aspects of the invention will be illustrated by examples from aerial scanning. The specific features of other mobile scanning methods, e.g. car or rail based mapping, can be applied accordingly.

Aerial scanning is typically performed with instruments whose beam deflection element generates the scanning pattern by a rotating, a saw-tooth, or an oscillating type of mode of beam deflection with respect to a central axis of the scanning instrument. The central axis is typically aligned to the Nadir ("straight down") direction, while the rotation or swinging movement provides a periodic scan pattern.

The scanning instrument generates scan pulses in a periodic manner and transmits them according to the scan pattern. For aerial scanning, periodic manner is understood in a broad sense, i.e. the generation of the pulse might involve a periodic or pseudorandom modulation, or even a combination of both, e.g. as disclosed in EP 4 148 458 A1. Since the pulse generation is provided by purely electronic components, the practical limit of the pulse rate is set by the detection and assignment of the return pulses. This practical limit is often the resolution of the multiple-pulse-in-the air (MPiA) ambiguity. Contemporary MPiA resolution methods (e.g. US 10,732,282 B2; EP 3 640 670 A1) allow MHz pulse rates for the typical flight heights.

Depending on the survey task different scan pattern parameters or different type of scan patterns are optimal. By way of example for scanning an urban area scan patterns configured to provide information regarding the vertical walls are ideal. Moreover the advantages of large swath width cannot be fully utilized due to the shadows casted by the buildings. In spite of disadvantages in the homogeneity, circular scan patterns, often with relatively small field/angle of view are often chosen for such survey tasks. Throughout this description field of view is defined to have angular dimensions, while the corresponding linear quantity will be called as swath width. Unless otherwise provided for circular scan patterns field and angle of view will be used in an interchangeable manner.

A landscape survey, e.g. for agricultural purposes, provides different conditions. Here optimizing the survey effort, by performing a wide field of view scan, preferably from a greater flight height is desirable. In other words the scan is performed with the largest reasonable swath width. The scan pattern is often linear or alike.

Providing a flexible system capable of performing both types of survey tasks is desirable to improve usage rate of the survey instruments.

### OBJECT OF THE INVENTION

In view of the above circumstances, an object of the present invention is to provide more flexibility in designing a survey job by a mobile scanning instrument.

A particular object is to provide survey instrument with adaptable scan patterns.

These objectives are at least partly achieved by realizing the characterizing features of the independent claims. Features, which further develop the invention in an alternative or advantageous manner are described in the dependent patent claims.

### SUMMARY OF THE INVENTION

The present invention relates to a mobile scanning instrument configured to be mounted on a carrier vehicle, and configured to acquire point cloud data representing a target area.

The mobile scanning instrument comprises a beam deflection element. The beam deflection element comprises a central axis, in particular a central axis corresponding to a section of a beam path. While other arrangements are also possible the central axis often corresponds the beam path of the beam entering the beam deflection element and/or an imaginary beam path corresponding to an undeflected outgoing beam.

The beam deflection element comprises a first and a second wedge. The first wedge is mounted rotatable about the central axis and has optical characteristics for deflecting the scanning beam with a first deflection angle. The second wedge is mounted rotatable about the central axis and has optical characteristics for deflecting the scanning beam with a second deflection angle. The skilled person understands that the deflection angles comprise orientation information, i.e. they correspond to vectors and not scalars. The first and second wedges are configured to deflect at least the outgoing scanning beam, in particular both the outgoing scanning beam, and the portion of the reflected scanning beam. In other words the outgoing scanning beam is deflected by both the first and second wedges. By way of example the first wedge is understood to be the wedge the first in the direction of the outgoing scanning beam. Moreover, from here on it is assumed that the scanning instrument is utilizing a monochromatic scanning beam, in particular a laser beam, and the optical properties of the different components are defined with respect of the wavelength of the scanning beam. The specific properties of other types of scanning instrument can be applied accordingly.

The skilled person understands that due to the underlying physical principles said deflection angles correspond to specific orientation ranges of the wedges with respect to the scanning beam. In addition, said deflection angles represent an approximate model, and when designing a complex optical system, the skilled person could use a different, more accurate modeling. While some embodiments of the claimed invention comprise components shaped as truncated solids with non-parallel bases, in particular truncated cylinders, as one of the first and second wedges, wedges are to be understood as components providing the beam deflection with given beam deflection angles, irrespective of their forms or whether they are unitary components or comprise subcomponent. By way of example from here on it is assumed that the wedges are embodied as refractive beam deflecting elements. The specific properties of other beam deflecting elements, in particular diffractive elements might be applied accordingly.

For scanning instruments according to the invention the first and the second wedges are built such that the second deflection angle is different from the first deflection angle. In other words, the first and second wedges are equivalent to, in particular embodied as, a generalized Risley prism pair.

The scanning instrument is configured to set the first wedge to rotate at a first rate in a first direction and to set the second wedge to rotate at a second rate in a second direction. It is clear for the skilled person that the inventive scanning instrument is configured to perform the acquisition of the point cloud such that both of the wedges are rotating and deflecting the scanning beam according to their respective parameters. In particular, the first rate and the second rate are adjustable, specifically such that the second rate has a definite relationship to the first rate, especially such that the two remain equal.

The scanning instrument is configured to provide a first scan pattern with a circular shape with respect to the central axis by setting the second direction equal to the first direction. Circular shape in the sense of the present invention is to be understood in a broader sense. In particular rose curves, or patterns whose average diameter changes slowly with respect to the first rate are also considered as patterns with circular shape.

The scanning instrument is configured to provide a second scan pattern having an elliptical shape with respect to the central axis by setting the second direction to the opposite of the first direction. The considerations regarding the first scan pattern apply accordingly to the second scan pattern.

In some embodiments, the scanning instrument is configured to provide the first and second scan patterns by setting the second rate equal to the first rate. Equal in particular represents sufficiently equal to realize a first pattern with stable angle of view and/or second scan pattern with stable orientation, especially yaw angle, with respect to the reference frame of the scanning instrument. Setting the rate might be performed manually, e.g. by a potentiometer based interaction element, semi automatically based on an operator command, e.g. by pressing a hardware of software button or activating tick box, or fully automatically as a hard-coded feature.

In some embodiments, the first wedge is embodied as a cylindrical wedge exhibiting a first wedge angle. The first wedge is made of a transparent material, in particular of flint glass, having a refractive index from an interval of 1.7 to 2.3. The application of transparent materials with high refractive index allows compact design with large deflection angles. The skilled person can determine the respective geometric and material properties further taking into account e.g. weight and/or size constraints.

The second wedge is embodied as a cylindrical wedge exhibiting a second wedge angle. The second wedge is made of a transparent material, in particular of flint glass, having a refractive index from an interval of 1.7 to 2.3. For such embodiments the deflection angles are provided based on the respective wedge angles and refractive indexes.

In some specific embodiments, the second refractive index is equal to the first refractive index, in other words the two wedges are formed from the same material or material with similar refractive index. Such embodiments can be advantageously combined with embodiments, wherein the plane of the wedges closer to the other wedge are perpendicular to the central axis, i.e. wherein the airgap between the wedges cause only an otherwise insignificant parallel displacement of the scanning beam. To ensure different first and second deflection angles the first and second wedge angles are designed to be non-equal.

In some embodiments, the first wedge is mounted such that a plane closer to the second wedge is perpendicular to the central axis. The second wedge is mounted such that a plane closer to the first wedge is perpendicular to the central axis. By way of example from here on only these embodiments will be discussed in details, the specific properties of further embodiments can be applied accordingly.

In some embodiments, the first and the second wedges are built such that a difference of the first and second deflection angles falls into an interval of 2° to 15°. In some specific embodiments, the first deflection angle is less than 15° and the second deflection angle is more than 15°.

In some embodiments, the scanning instrument is configured to be mounted to an aerial vehicle as carrier vehicle. In some specific embodiments, the aerial vehicle is one of (i) a helicopter, (ii) a light fixed-wing aircraft, having a gross take-off weight below 6000 kg, and (iii) a large UAV, having a weight over 150 kg. In other words, some embodiments of the inventive scanning instrument are of considerable weight and/or spatial extension and foreseen to be used for professional surveying purposes. The mobile scanning instrument might be configured to be mounted such that that the central axis corresponds to a nadir direction. Alternatively, the mounting of the scanning instrument might provide adjustment options for the central axis.

In some specific embodiments, the scanning instrument is configured to provide a compensation of a roll and/or pitch of an aerial vehicle. In particular the scanning instrument comprises a third wedge mounted in the beam path in an adjustable manner to compensate a roll and/or pitch. Said third wedge might be foreseen to provide a limited adjustment range and/or slow movement, e.g. similarly to the embodiments disclosed in EP 3 825 722 B1.

Alternatively or additionally, the scanning instrument might comprise a fourth wedge, in particular being mounted with a fixed spatial relationship with the first wedge, configured to provide beam deflection with a fourth wedge angle to the outgoing measuring beam for compensating an angle difference occurring between outgoing measurement beam and returning radiation due to the finite round trip time of the emitted measurement beam. Said fourth wedge can be mounted to the beam path along the central axis, in a position precedent to the first wedge, i.e. closer to the source than the first wedge.

In some embodiments, the mobile scanning instrument is configured to set an angle of view of the first scan pattern about the central axis. In other words, the embodiments are configured to provide a settable scan radius for circular patterns. Setting the angle of view is performed by setting a first phase shift, and by setting the first and second wedges to rotate with a phase difference corresponding to the first phase shift. In some specific embodiments, the mobile scanning instrument configured to set the angle of view to be smaller than 40°. The mobile scanning instrument might also be configured to set the angle of view to be larger than 50°.

In some embodiments, the mobile scanning instrument is configured to set a displacement angle of the second scan pattern. The displacement angle represents a rotation around the central axis. In other words, the scanning instrument is configured to provide different alignments of the long axis of the elliptical scan pattern, in particular with respect to the flight direction. The displacement of the second scan pattern is performed by setting a second phase shift, and by setting the first and second wedges to rotate with a phase difference corresponding to the second phase shift. Displacing the second scan pattern is beneficial as it allows the instrument to provide a broad pattern for landscape surveying of a substantially flat terrain, or a narrow pattern for surveying an urban environment or valley.

In some embodiments, the first rate is at least 50 Hz, in particular more than 100 Hz. In some specific embodiment, the scanning instrument is configured to provide the scanning beam as a pulsed laser beam, wherein a pulse repletion rate exceeds 1 MHz.

The present invention also relates to a method of controlling a mobile scanning instrument having the inventive beam deflection element. In other words, the beam deflection element comprises (i) a central axis, in particular a central axis corresponding to a section of a beam path, (ii) a first wedge mounted rotatable about the central axis, and having optical characteristics for deflecting the scanning beam with a first deflection angle, and (iii) a second wedge mounted rotatable about the central axis, and having optical characteristics for deflecting the scanning beam with a second deflection angle different from the first deflection angle. The method comprises (i) selecting a scan pattern from set of enabled scan patterns, (ii) providing rotation parameters on the basis of the selected scan pattern, and (iii) setting the first and second wedges to rotate corresponding to the rotation parameters. The rotation parameters comprise (a) a first rate and a first direction defining a rotation of the first wedge about the central axis, and (b) a second rate and a second direction defining a rotation of the second wedge about the central axis. It is self-explanatory for the skilled artisan that the utilization of numerals and letters does not represent e.g. a sequence of performing the steps. These and all further numbers do not represent a temporal and spatial connection, not even in the form of a preferred sequence, and merely serve the purpose of readability.

The set of enabled scan patterns comprises a first scan pattern having a circular shape with respect to the central axis. The rotation parameters corresponding to the first scan pattern are such that the second direction is equal to the first direction. The set of enabled scan patterns comprises a second scan pattern having an elliptical shape with respect to the central axis. The rotation parameters corresponding to the second scan pattern are such that the second direction is opposite to the first direction.

In some embodiments, the method further comprises setting an angle of view of the first scan pattern about the central axis by providing a first phase shift, and by setting the first and second wedges to rotate with a phase difference corresponding to the first phase shift. In other words, the method provides a settable scan radius for circular patterns. The angle of view is in particular variable in a manner that at least one settable angle of view is smaller than 40° and another settable angle of view is larger than 50°. In some specific embodiments, the first and second rates are also equal.

In some embodiments, the method further comprises providing a displacement of the second scan pattern by a displacement angle representing a rotation around the central axis by providing a second phase shift, and setting the first and second wedges to rotate with a phase difference corresponding to the second phase shift. In some specific embodiments, the first and second rates are also equal.

The present invention also relates a to computer program product comprising program code segment which is stored on a machine-readable medium, or being embodied by an electromagnetic wave and has computer-executable instructions for controlling a mobile scanning instrument having a beam deflection element. The beam deflection element comprises (i) a central axis, in particular a central axis corresponding to a section of a beam path, (ii) a first wedge mounted rotatable about the central axis, and having optical characteristics for deflecting the scanning beam with a first deflection angle, and (iii) a second wedge mounted rotatable about the central axis, and having optical characteristics for deflecting the scanning beam with a second deflection angle different from the first deflection angle. The computer program product comprises computer-executable instructions for performing (i) accessing input data comprising a pattern selection command, (ii) selecting a scan pattern from a database of enabled scan patterns based on the input data, (iii) providing rotation parameters based on the selected scan pattern, and (iv) providing output data comprising commands to set the first and second wedges to rotate corresponding to the rotation parameters. The rotation parameters comprise (a) a first rate and a first direction defining a rotation of the first wedge about the central axis, and (b) a second rate and a second direction defining a rotation of the second wedge about the central axis. The database of the enabled scan patterns comprises a first scan pattern having a circular shape with respect to the central axis. The rotation parameters corresponding to the first scan pattern are such that the second direction is equal to the first direction. The database of the enabled scan patterns comprises a second scan pattern having an elliptical shape with respect to the central axis. The rotation parameters corresponding to the second scan pattern are such that the second direction is opposite to the first direction.

In some embodiments, the computer program product comprises computer executable instructions for performing a selected embodiment of the method.

### BRIEF DESCRIPTION OF THE DRAWINGS

By way of example only, specific embodiments of the invention will be described more fully hereinafter with reference to the accompanying figures, wherein:
Figure 1a depicts an aircraft performing a prior art surveying of a countryside using a linear scan pattern.
Figure 1b depicts a helicopter performing a prior art surveying of an urban area using a circular scan pattern.
Figure 2a-c depicts elliptical patterns with three orientations with respect of the central axis.
Figure 3 depicts the schematics of an embodiment of the inventive scanning instrument.
Figure 4 depicts the schematics of an embodiment of the first and second wedges and the respective optical properties.
Figure 5 shows the schematics of an effect of first phase shift on the first scanning pattern.
Figure 6 shows the schematics of an effect of a second phase shift on the second scanning pattern.
Figure 7 illustrates, by a flowchart, of providing a selected scan type with the desired scan parameters.

### SPECIFIC EMBODIMENTS OF THE INVENTION

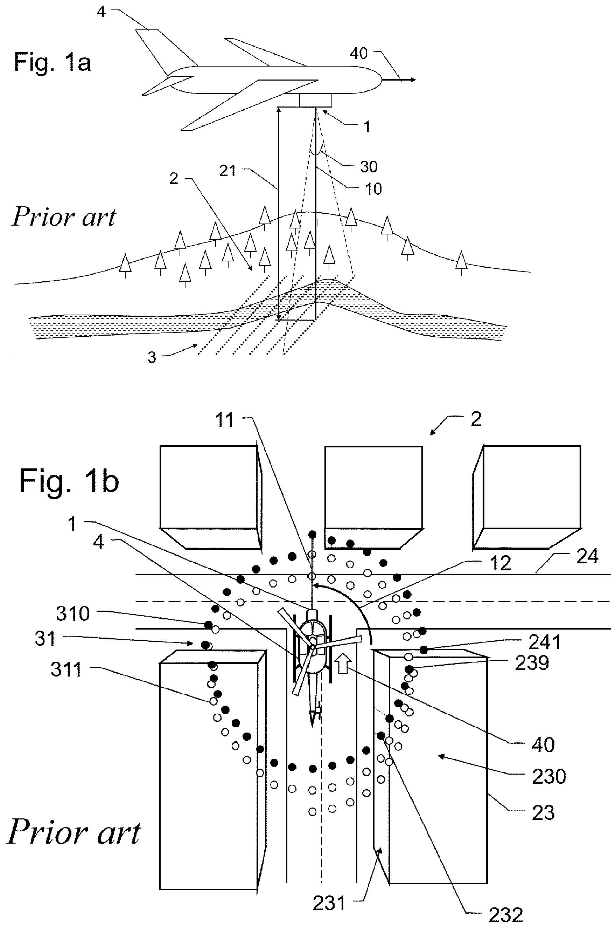

Figure 1a shows a prior art mobile scanning instrument **1** carried by an aircraft **4** acquiring point cloud data from a target area **2** while the aircraft **4** travels with a carrier velocity **40** relative to the target area **2.** The target area is a wooded hilly area, which comprises no vertical walls. I.e. the scanning task is a landscape scanning.

The mobile scanning instrument **1** is usually mounted together with further surveying elements and cameras facing downwards or to oblique directions. The central axis **10** of the mobile scanning instrument **1** is aligned in a known way relative to the carrier velocity **40.** In the depicted embodiment the central axis **10** is aligned to the nadir. The object distance **21** between the target area **2** and the scanning instrument **1** might be defined, as depicted, with respect to the central axis **10.** Alternative mountings, e.g. the central axis **10** could point obliquely to a side, forwards or backwards with respect to the carrier velocity **40** are also within the sense of the present invention. The scanning instrument **1** is configured to provide a scan pattern **3,** depicted as a line pattern. This pattern is well-suited for the depicted landscape scanning, as it allows a large field of view **30,** i.e. a large swath width.

Figure 1b shows another typical survey task, wherein a helicopter as carrier vehicle **4,** performs an urban scanning with a scanning beam **11** while travelling with a carrier velocity **40.** The target area **2** comprises objects, e.g. the house **23,** with vertical or near vertical faces **231.** Moreover a considerable height difference might exist between the top surface **230** of the objects **23** and the ground level **24,** represented by the street.

To gain information on the vertical faces **231** it is advantageous to provide first scan pattern **31** having a circular shape. The scanning instrument **1** deflects the beam **11** by rotating it **12** along the scan pattern **31.** The actual location of the object points are determined by the scan pattern **31** and the carrier velocity **40.** Object points from the actual cycle **310** are represented by filled circles, while object points from previous cycles **311** are represented by empty circles. By way of example the depicted object points correspond to a case of equal angular distance, or in other words strictly periodic pulse rate.

Especially important are the object points **232** corresponding to vertical faces **231** as well as object point pairs **239,241** corresponding to a transition from the ground level **24** to the top surface **230** of an object. Due to the large density of objects **23** as well as the requirement to acquire data from the vertical faces **231** it is beneficial to perform the scan with a smaller field of view, e.g. 40° or less.

The object points **310,311** depicted in Figure 1b correspond to a strictly periodic pulse train. This embodiment was chosen for its illustration purposes only, the present invention is not limited to any specific pulse sequence / pulse train.

Figure 1a-b depicts two primary scanning task with different requirements. Scanning instruments configured to adjust their scan parameter to perform both types of task are advantageous.

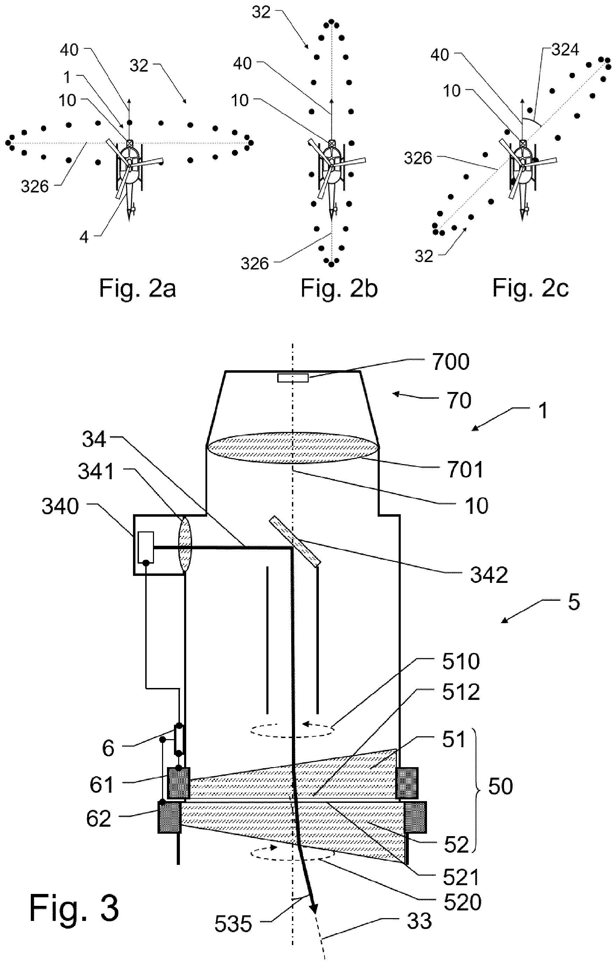

Figure 2a-c shows a carrier vehicle **4,** depicted as a helicopter, travelling with a carrier velocity **40** and equipped with a scanning instrument **1** providing a second scan pattern **32** having an elliptical shape about the central axis **10.** The depicted central axis **10** is perpendicular to the carrier velocity and corresponds to a nadir direction. This choice serves purely didactic reasons and the present invention is not limited to this embodiment. For transparency reasons the pattern **32** is depicted in a reference frame moving together with the central axis **10.** The object points are generated analogous to the case shown in Figure 1b. The invention is not limited to the depicted strictly periodic pulse rate case, but can be applied with modulated pulse rates as well.

Elliptical patterns **32** offer some advantageous properties of the line and circular patterns of Figures 1a and 1b respectively. The long axis **326** of the ellipse can cover a large field of view corresponding to a line pattern, e.g. about 60°. Advantageously the point density is approximately doubled due to scanning the same field of view twice. Since the scanning beam is always emitted in an oblique angle elliptical patterns enable the scanning of vertical objects.

Figure 2a depicts the elliptical pattern **32** such that its long axis **326** is perpendicular to the carrier velocity **40.** This embodiment is advantageous as it provides the largest swath width. Other embodiments are also possible. In Figure 2b the long axis **326** is parallel with the carrier velocity **40,** which results in a small swath width, however the point density increases as result. Figure 2c show an intermediate case, wherein the elliptical pattern **32** is displaced by a displacement angle **324.** Said displacement angle **324** can be set based on the scanning task and, in particular can be adjusted to achieve an identical point density in perpendicular to and parallel with the carrier velocity depending on carrier velocity and terrain inclination.

Figure 3 schematically depicts a scanning instrument **1** having a transmission unit **5** with a beam deflection element **50** comprising a first wedge **51** and a second wedge **52.** The transmission unit **5** also comprises a pulse source **340,** and focusing/collimating elements **341** as well as a mirror **342** to steer the beam towards the beam deflection element **50.** In the depicted embodiment a section of the beam path **34** corresponds to the central axis **10** of the transmission unit **5** or the scanning instrument **1.** Other embodiments are also possible and the specific properties shall be applied accordingly. The beam deflection element **50** defines the actual transmission direction **33** of the scanning pulses, i.e. by providing an actual deflection angle **535.** A periodic variation of actual transmission direction **33** along the scan pattern is provided by rotating **510,520** the first **51** and second wedges **52** with the respective motors **61,62.**

The depicted first **51** and the second wedges **52** are mounted such that the planes **512,521** closer to the other wedge are perpendicular to the central axis **10.** Alternative mounting, e.g. wherein the planes farther to the other wedge are perpendicular to the central axis **10,** or wherein the planes are aligned angled to the central axis **10** are also within the sense of the present invention. From the depicted embodiment it is also clear to skilled person that the central axis **10** is not a forced axis of rotation for the wedges **51,52** in a kinematic sense.

The wedges **51,52** are formed from transparent material, in particular flint glass with refractive index higher than 1.7. High refractive index is advantageous as it allows large deflection angles for comparatively compact designs. By way of example the first **51** and the second wedges **52** might be formed from the same material.

The depicted scanning instrument **1** also comprises a detection unit **70,** with a sensing element **700** appropriate focusing optics **701.** The detection unit **70** is configured to acquire pulses backscattered from the target area (not shown). The depicted scanning instrument also comprises a control unit **6** configured to control the pulse source **340,** the motors **61,62** driving the wedges **51,52** and to access data from the detection unit (not shown).

The skilled person understands that in the above schematic representation some essential features of claimed invention might have been omitted and/or displayed in simplified manner. Moreover some of the depicted features, while advantageous, may not be strictly necessary to realize the invention. These features are not to be construed as limiting the claimed subject matter, which is defined only by the claims.

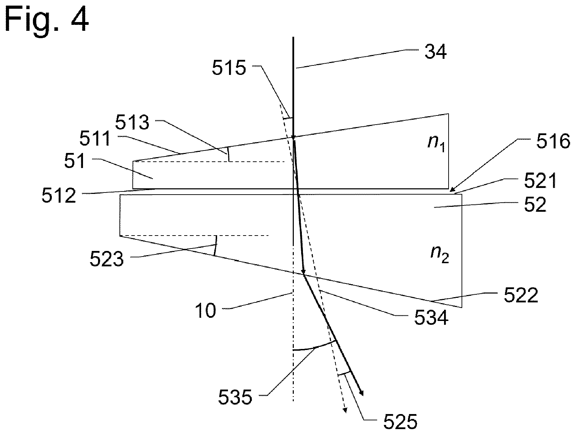

Figure 4 shows the beam deflection effect provided by the first **51** and second wedges **52.** The wedges **51,52** are embodied as truncated cylinders, or in other word cylindrical wedges, with respective wedge angles **513,523.** The wedges **51,52** are arranged as a generalized Risley prism pair. I.e. the inner planes **512,521** closer to the other wedges are parallel to each other, and in particular perpendicular to a central axis **10,** corresponding to a section of the beam path **34** of the incident beam. A thin air gap **516** exist between the two wedges **51,52** to ensure the independent rotatability of the wedges (not shown).

The wedges **51,52** are formed from transparent material with respective refractive indices **n₁,n₂**. By way of example it is assumed that **n₁=n₂**, i.e. the two wedges are made of the same material. The beam path **34** is such that the incident beam is deflected twice at the respective outer planes **511,522** of the wedges **51,52.** I.e. the internal deflection causing a small parallel offset at the air gap **516** is neglected for transparency reasons. The actual beam path **34** does not realize the first **515** and second deflection angles **525** as they relate to an imaginary beam path **534** which would have been present if only one the wedges **51,52** would have been applied.

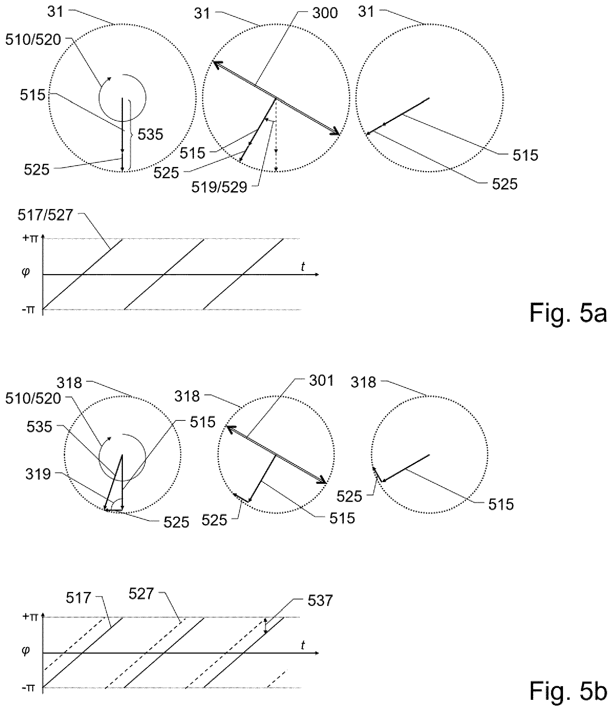

Figure 5 illustrates the concept of adjusting the angle of view **300,301** for the first scan pattern **31,318** by introducing a first phase shift **319.** In the top row of Figure 5a a first embodiment of the first scan pattern **31** is shown wherein the first phase shift between the first **515** and the second deflection angles **525** is zero, i.e. the two are aligned and the actual deflection angle **535** has the largest magnitude. The phases **517,527** of the respective deflection angles **515,525,** reduced to a ±*π* interval, as a function of time are depicted in the bottom row.

According to the properties of the first scan pattern **31** the first **510** and the second directions **520** (only shown in one panel) are equal. For reasons of transparency the first **519** and second rates **529** are also depicted to be equal. Since the first phase shift is zero in this embodiment, the first **515** and second deflection angles **525** are in phase. The angle of view **300** of this first embodiment of the first scan pattern **31** is the highest.

A second embodiment of the first scan pattern **318** is shown the top row of Figure 5b, while the bottom row depicts the phases **517,527** of the respective deflection angle **515,525** as a function of the time. Here the first phase shift **319** between the first **515** and second deflection angles **525** are such that the two are perpendicular to each other. Otherwise Figure 5a and 5b are analogous. Since the directions **510,520** and also the rates are equal, the actual phase difference **537** between the first **515** and second deflection angles **525** is constant and corresponds to the first phase shift **319.**

Owing to the nonzero phase difference **537,** i.e. the first phase shift **319,** the magnitude of the actual deflection angle **535,** and with that the angle of view **301** of the second embodiment of the first scan pattern **318,** is smaller than that of the first embodiment of the first scan pattern. The smallest angle of view provided when the first **515** and second deflection angles **525** are in an opposing state.

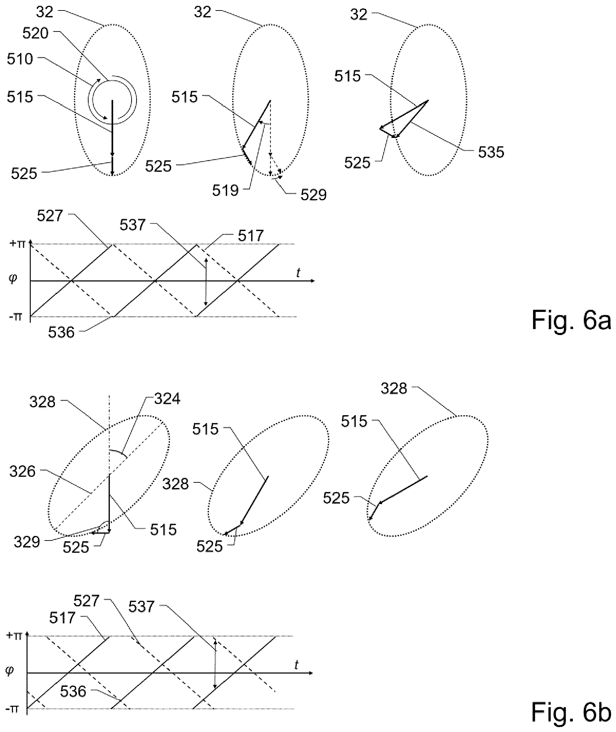

Figure 6 illustrates the concept of adjusting the displacement angle **324** for the second scan pattern **32,328** by introducing a second phase shift **329.** According to the properties of the second scan pattern **32** the first **510** and the second directions **520** are opposite to each other. The first **519** and second rates **529** are depicted to be equal, i.e. first **515** and second deflection angles **525** rotate with the same speed but in opposite directions, i.e. the respective phase **517,527** change in an opposite manner. This means that during one complete rotation the first **515** and second deflection angles **525** experience all actual phase differences **537** from a ±*π* interval as the actual deflection angle **535** scans the elliptical shaped second scan pattern **32,328.**

The second embodiment of the second scan pattern **328,** depicted in Figure 6b, is thus only distinguished from the first embodiment of the second pattern **32,** depicted in Figure 6a, by a displacement **324** of the long axis **326** with respect to a fixed orientation. Or, as expressed with the actual phase difference **537,** the points **536** where the actual phase difference **537** is zero (or equivalently 2nπ) is shifted due to the introduction of the second phase shift **329.**

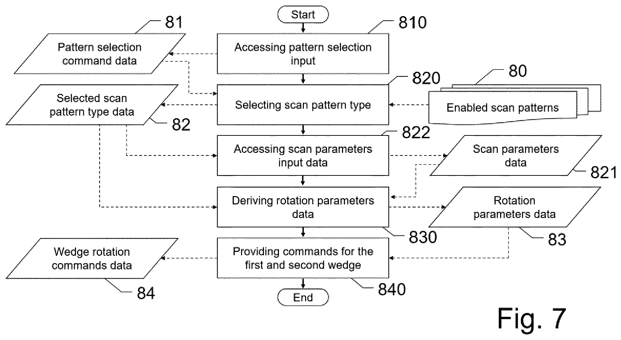

Figure 7 schematically depicts, by a flowchart, of providing a scan pattern, with respective scan parameters **821.** Command/flow-lines show as bold and data-lines as dashed arrows. The skilled person understands that the depicted flowcharts focuses on the features of the claimed invention and the actual embodiments comprise further, non-depicted elements, in particular command or data elements and/or data transfer lines. Moreover, command or data modules might be depicted in a simplified form due to reasons of clarity and conciseness.

In the first step the type **82** of the scan pattern is selected **820** based on database of enabled scan patterns **80** and accessing **810** pattern selection commands **81,** in particular from an operator. The scan parameters **821,** e.g. field of view, scan rate, pulse rate, are accessed **822** with respect to the selected scan pattern type **82.** In particular the user interface may enable to manually input a desired angle of view if an embodiment of the first scan pattern is selected **820,** but this option will be hidden if an embodiment of the second scan pattern is selected **820.** Based on the selected scan pattern type **82** and the desired scan parameters **821** the rotation parameters **83,** in particular the orientations and rates of the wedges and the respective phase shifts, are derived **830.** The rotation parameters **83** are then translated **840** into wedge rotation commands **84.**

Although the invention is illustrated above, partly with reference to some specific embodiments, it must be understood that numerous modifications and combinations of different features of the embodiments can be made. All of these modifications lie within the scope of the appended claims.

## Claims

1. Mobile scanning instrument (1) configured to be mounted on a carrier vehicle (4), and configured to acquire point cloud data representing a target area (2), wherein the mobile scanning instrument (1) comprises a beam deflection element (50) comprising
- a central axis (10), in particular a central axis (10) corresponding to a section of a beam path (34),
- a first wedge (51) mounted rotatable about the central axis (10), and having optical characteristics for deflecting the scanning beam (11) with a first deflection angle (515),
- a second wedge (52) mounted rotatable about the central axis (10), and having optical characteristics for deflecting the scanning beam (11) with a second deflection angle (525),
wherein the mobile scanning instrument (1) is configured
- to set the first wedge (51) to rotate at a first rate (519) in a first direction (510) and to set the second wedge (52) to rotate at a second rate (529) in a second direction (520), and
- to provide a first scan pattern (31,318) having a circular shape with respect to the central axis (10) by setting the second direction (520) equal to the first direction (510),
**characterized in that**
- the first (51) and the second wedges (52) are built such that the second deflection angle (525) is different from the first deflection angle (515),
- the mobile scanning instrument (1) is configured to provide a second scan pattern (32,328) having an elliptical shape with respect to the central axis (10) by setting the second direction (520) to the opposite of the first direction (510).

2. The scanning instrument (1) according to claim 1 being configured to provide the first (31,318) and second scan patterns (32,328) by setting the second rate (529) equal to the first rate (519).

3. The scanning instrument (1) according to any one of claims 1 to 2, wherein
- the first wedge (51)
∘ is embodied as a cylindrical wedge exhibiting a first wedge angle (513), and
∘ is made of a transparent material having a first refractive index (m),
- the second wedge (52)
∘ is embodied as a cylindrical wedge exhibiting a second wedge angle (523), and
∘ is made of a transparent material having a second refractive index (n2),
- the deflection angles (515,525) are provided based on the respective wedge angles (513,523) and refractive indices (n₁,n₂),
in particular, wherein
- the first refractive index (m) falls to an interval of 1.7 to 2.3,
- the second refractive index (n₂) is equal to the first refractive index (m) and the first (513) and second wedge angles (523) are designed to be non-equal.

4. The scanning instrument (1) according to claim 3 wherein
- the first wedge (51) is mounted such that a plane (512) closer to the second wedge (52) is perpendicular to the central axis (10),
- the second wedge (52) is mounted such that a plane (521) closer to the first wedge (51) is perpendicular to the central axis (10).

5. The scanning instrument (1) according to any one of the preceding claims, wherein the first (51) and the second wedges (52) are built such that a difference of the first (515) and second deflection angles (525) falls into an interval of 2° to 15°, in particular wherein the first deflection angle (515) is less than 15° and the second deflection angle (525) is more than 15°.

6. The scanning instrument (1) according to any one of the preceding claims being configured to be mounted to an aerial vehicle as carrier vehicle (4), in particular, wherein
- the mobile scanning instrument (1) is mounted such that the central axis (10) corresponds to a nadir direction, and
- the aerial vehicle is one of
∘ a helicopter,
∘ a light fixed-wing aircraft, having a gross take-off weight below 6000 kg
∘ a large UAV, having a weight over 150 kg.

7. The scanning instrument (1) according to claim 6 configured to provide a compensation of a roll and/or pitch of an aerial vehicle, in particular by comprising a third wedge mounted in the beam path (34) in an adjustable manner.

8. The mobile scanning instrument (1) according to any one of the preceding claims being configured to set an angle of view (300,301) of the first scan pattern (31,318) about the central axis (10) by setting a first phase shift (319), and by setting the first (51) and second wedges (52) to rotate with a phase difference corresponding to the first phase shift (319),
in particular wherein the mobile scanning instrument (1) is configured to set the angle of view (300,301) to be smaller than 40°.

9. The mobile scanning instrument (1) according to any one of the preceding claims being configured to set a displacement angle (324) of the second scan pattern (32,328) corresponding to a rotation around the central axis (10) by setting a second phase shift (329), and by setting the first (51) and second wedges (52) to rotate with a phase difference corresponding to the second phase shift (329).

10. The mobile scanning instrument (1) according to any one of the preceding claims wherein the first rate (519) is at least 50 Hz.

11. A method of controlling a mobile scanning instrument (1) having a beam deflection element (50) comprising
- a central axis (10), in particular a central axis (10) corresponding to a section of a beam path (34),
- a first wedge (51) mounted rotatable about the central axis (10), and having optical characteristics for deflecting the scanning beam (11) with a first deflection angle (515), and
- a second wedge (52) mounted rotatable about the central axis (10), and having optical characteristics for deflecting the scanning beam (11) with a second deflection angle (525) different from the first deflection angle (515),
the method comprising
- selecting (820) a scan pattern (3,31,32,318,328) from set of enabled scan patterns (80),
- providing (830) rotation parameters (83) on the basis of the selected scan pattern (82), wherein the rotation parameters (83) comprise
∘ a first rate (519) and a first direction (510) defining a rotation of the first wedge (51) about the central axis (10), and
∘ a second rate and (529) a second direction (520) defining a rotation of the second wedge (52) about the central axis (10),
- setting (840) the first (51) and second wedges (52) to rotate corresponding to the rotation parameters (83),
wherein
- the set of enabled scan patterns (80) comprises a first scan pattern (31,318) having a circular shape with respect to the central axis (10), and
- the rotation parameters (83) corresponding to the first scan pattern (31,318) are such that the second direction (520) is equal to the first direction (510),
**characterized in that**
- the set of enabled scan patterns (80) comprises a second scan pattern (32,38) having an elliptical shape with respect to the central axis (10), and
- the rotation parameters (83) corresponding to the second scan pattern (32,328) are such that the second direction (520) is opposite to the first direction (510).

12. The method according to claim 11, further comprising setting an angle of view (300,301) of the first scan pattern (31,318) about the central axis (10) by providing a first phase shift (319), and by setting the first (51) and second wedges (52) to rotate with a phase difference corresponding to the first phase shift (319).

13. The method according to claim 11, further comprising providing a displacement of the second scan pattern (32,328) by a displacement angle (324) corresponding to a rotation around the central axis (10) by providing a second phase shift (329), and by setting the first (51) and second wedges (52) to rotate with a phase difference corresponding to the second phase shift (329).

14. A computer program product comprising program code segment which is stored on a machine-readable medium, or being embodied by an electromagnetic wave and has computer-executable instructions for controlling a mobile scanning instrument having (1) a beam deflection element (50), wherein the beam deflection element comprises
- a central axis (10),
- a first wedge (51) mounted rotatable about the central axis (10), and having optical characteristics for deflecting the scanning beam (11) with a first deflection angle (515), and
- a second wedge (52) mounted rotatable about the central axis (10), and having optical characteristics for deflecting the scanning beam (11) with a second deflection angle (525) different from the first deflection angle (515),
the computer program product comprises computer-executable instructions for perform ing
- accessing (810) input data (81) comprising a pattern selection command,
- selecting (820) a scan pattern (3,31,32,318,328) from a database of enabled scan patterns (80) based on the input data (81),
- providing (830) rotation parameters (83) based on the selected scan pattern (82), wherein the rotation parameters (83) comprise
∘ a first rate (519) and a first direction (510) defining a rotation of the first wedge (51) about the central axis (10),
∘ a second rate (529) and a second direction (520) defining a rotation of the second wedge (52) about the central axis (10),
- providing (840) output data comprising commands (84) to set the first (51) and second wedges (52) to rotate corresponding to the rotation parameters (83),
wherein
- the database of the enabled scan patterns (80) comprises a first scan pattern (31,318) having a circular shape with respect to the central axis (10), and
- the rotation parameters (83) corresponding to the first scan pattern (31,318) are such that the second direction (520) is equal to the first direction (510),
**characterized in that**
- the database of the enabled scan patterns (80) comprises a second scan pattern (32,328) having an elliptical shape with respect to the central axis (10), and
- the rotation parameters (83) corresponding to the second scan pattern (32,328) are such that the second direction (520) is opposite to the first direction (510).

15. The computer program product according to claim 14, wherein the computer program product comprises computer executable instructions for performing a method according to any one of claims 11 to 13.
